# EUROPEAN PATENT APPLICATION

(11) **EP 4 407 007 A1**
(43) Date of publication of application: **31.07.2024**
(21) Application number: 24152778.7
(22) Date of filing: 19.01.2024
(51) Int. Cl.: C09D 11/033, C09D 11/18

(54) **ECO-FRIENDLY INK FORMULATION, PARTICULARLY FOR BALLPOINT PENS AND ASSOCIATED BALLPOINT PEN CARTRIDGE**

(30) Priority: 24.01.2023 IT 202300001002
(71) Applicant: Reinol S.r.l., 10071 Borgaro Torinese (TO) (IT)
(72) Inventor: BUZZETTI, Massimiliano, 10071 BORGARO TORINESE (TO) (IT); GIPPA, Chiara, 10071 BORGARO TORINESE (TO) (IT)
(74) Representative: Studio Torta S.p.A.

(57) **Abstract**

An ink formulation, particularly for ballpoint pens, including a solvent, a polymer resin, a soluble dye or pigment, and optionally additives; wherein the solvent consists exclusively of a solvent of plant origin or in any case from renewable sources, and preferably of a dl-isopropylidene glycerol.

## Description

### CROSS-REFERENCE TO RELATED APPLICATIONS

This patent application claims priority from Italian patent application no. 102023000001002 filed on January 24, 2023, the entire disclosure of which is incorporated herein by reference.

### Technical field of the invention

The present invention relates to an innovative ink formulation, particularly for solvent-based ballpoint pens, which has a low environmental impact and can therefore be considered as an eco-friendly ink formulation. The invention also relates to an associated ballpoint pen refill cartridge filled with an ink made according to the above-mentioned innovative formulation.

### Prior art

Ballpoint pen ink formulations currently in use are known to contain high boiling point (higher than 180°C) solvents, a synthetic resin, and soluble dyes with high tinting strength.

An example of a conventional formulation is as follows:

| | |
|---|---|
| ➢ High-boiling solvent mixture of medium to high polarity: | 60% |
| ➢ Ketone resin: | 34% |

| | |
|---|---|
| ➢ Solvent-soluble dye: | 5% |
| ➢ Additives: | 1% |

It should also be noted that writing instruments, such as ballpoint pens, are considered as items intentionally releasing chemical substances, as their use implies that ink is transferred onto an external support (e.g., paper) from the original item (e.g., the ballpoint pen).

In the case of solvent inks for ballpoint pens, the possible environmental impact is relatively high, and in any case higher than that of water-based inks (i.e., where the solvent is an aqueous solution), as the volatile part of the ink, which consists of solvent vapours emitted when the ink dries up, is released into the environment during and after writing.

Solvents normally used in known ballpoint pen ink formulations are organic solvents with a high boiling point (i.e., higher than 180°C). Those currently in use are selected from the following:
- benzyl alcohol, CAS No 100-51-6
- 2-phenoxyethanol, CAS No 122-99-6
- 1-phenoxypropan-2-ol, CAS No 770-35-4
- 1,2-propanediol, CAS No 57-55-6
- 2,2'-oxydiethanol, CAS No 111-46-6
- 2-methyl-2,4-pentanediol, CAS No 107-41-5

Replacing these solvents with possible other, 'alternative' solvents, which are less dangerous to health and at the same time have a low environmental impact, however to be identified, would not be easy. In fact, solvents that can be theoretically used as an alternative to those listed above are few, as the concentration of resins and solid pigments in an ink must be very high and is around 40/50% by weight of the total ink formulation (finished ink). Therefore, the solvent strength must be as good as that of the above-mentioned solvents already in use.

### Summary of the invention

One object of the present invention is to provide an innovative ink formulation, particularly for ballpoint pens, which has a low environmental impact, in the sense of being less dangerous to human health, being obtainable from renewable sources, and therefore exhibiting little or no carbon dioxide emission (the so-called `carbon footprint') due to the process for obtaining it.

Another object of the invention is to provide a ballpoint pen refill cartridge using such an ink formulation with little or no environmental impact.

According to the invention, an innovative ink formulation, particularly for solvent-based ballpoint pens, and an associated ballpoint pen refill cartridge, as well as a method for reducing the environmental impact of using ballpoint pens for writing, are provided as defined in the attached claims.

In particular, the innovative ink formulation according to the invention includes, similarly to the formulations known and used so far, at least one solvent, at least one polymer resin, and at least one soluble dye or pigment.

According to the main feature of the invention, however, instead of using in the ink formulation one or more of the common high-boiling-point solvents known in the art, either alone or in a mixture with each other, the ink formulation according to the invention includes a solvent which is selected exclusively from the group consisting of: DL-1,2-isopropylidene Glycerol, glycerin of plant origin, rapeseed oil, and mixtures thereof.

According to a highly preferred embodiment of the invention, the ink formulation according to the invention includes a single solvent consisting exclusively of a DL-isopropylidene Glycerol.

More particularly, the at least one solvent consisting of a DL-isopropylidene Glycerol (also definable as 2,2-dimethyl-1,3-dioxolan-4-ylmethanol) is the one uniquely identified by CAS number 100-79-8.

The ink formulation according to the invention may therefore contain a single solvent, consisting exclusively of a dl-isopropylidene glycerol, CAS 100-79-8.

In any case, the ink formulation according to the invention does not contain any, other than in the form of traces or impurities, of the conventional high-boiling-point solvents known in art, of fossil origin; in particular, it is substantially free of benzyl alcohol, 2-phenoxyethanol, phenoxypropan-2-ol, 1,2-propanediol, 2,2'-oxodiethanol, 2-methyl-2,4-pentanediol.

According to a further, preferred aspect of the invention, the polymer resin is selected from the group consisting of: ketone resins, cellulose esters, and mixtures thereof.

More particularly, the polymer resin preferably, but not exclusively, consists of cellulose acetate butyrate.

The ink formulation according to the invention can have the following percentage composition by weight, calculated on the total weight of the formulation:

| | |
|---|---|
| • DL-isopropylidene Glycerol: | 30÷90% |
| • Ketone resin: | 10÷80% |
| • Solvent-soluble dye: | 1÷30% |
| • Additives: | 0.1÷3%. |

The ink formulation according to preferred, but not exclusive, embodiments of the invention can also have the following percentage composition by weight, calculated on the total weight of the formulation:

| | |
|---|---|
| • DL-isopropylidene Glycerol: | 30÷70% |
| • Cellulose Acetate Butyrate: | 30÷45% |
| • Solvent-soluble dye: | 2÷20% |
| • Additives: | 0.1÷1%. |

Preferred ink formulations according to the invention may have the following average compositions by weight:

| | |
|---|---|
| • DL-isopropylidene Glycerol: | 60% |
| • Ketone resin: | 34% |
| • Solvent-soluble dye: | 5% |
| • Additives: | 0.5% |

Preferably, the ink formulation according to the invention also includes at least one additive consisting of a polymer with pseudoplastic rheological behaviour, preferably consisting of polyvinylpyrrolidone, in a concentration between 0.6% and 1.1% by weight.

A ballpoint pen refill cartridge comprising a container element and an ink, which is releasably inserted within the container element, wherein the ink has the above formulation, is also encompassed by the invention.

Finally, the invention also comprises a method for reducing the environmental impact of using ballpoint pens for writing, comprising the step of inserting into a ballpoint pen or its refill cartridge an ink, the ink itself comprising at least one solvent, at least one polymer resin, and at least one soluble dye or pigment;
wherein the solvent is exclusively of plant origin and therefore comes from renewable sources, especially a DL-isopropylidene Glycerol.

Furthermore, according to this method, the at least one resin is selected from cellulose esters and preferably is a cellulose acetate butyrate.

Lastly, a polymer with pseudoplastic behaviour, preferably polyvinylpyrrolidone, is also introduced into the ink for carrying out the method of the invention.

### Detailed description

Further features and advantages of the present invention will be apparent from the following description of possible non-limiting embodiments thereof, and by reference to the following practical, implementation and comparative examples.

The following examples and comparative examples are provided by way of illustration, and are not intended to limit the invention.

The idea behind the present invention is to use an ink formulation similar to the current ones, thus including at least one solvent, at least one polymer resin, at least one soluble dye or pigment, and optionally one or more additives; but to make the ballpoint pen ink have less or no impact on the environment by using solvents, and optionally also resins, obtained from renewable sources in the ink formulation, thus avoiding the release of solvents of fossil origin into the atmosphere.

Ink formulated with about 60% by weight or more of these "green" solvents has 100% atmospheric emissions from renewable sources; therefore, even the CO₂/equivalent however released into the atmosphere re-enters the natural cycle, as it comes from a renewable, especially plant, source.

The remaining approximately 40% of the total ink formulation, consisting of resins, optional pigments and dyes, and therefore being a solid, will not be emitted into the atmosphere and therefore, although of fossil origin, will not impact the environment because, it is assumed that, only a small part will be destined for waste in the short term, whereas the majority will become part of a durable good, such as notes in a notebook or documents intended for archiving.

A highly preferred solvent, and preferably selected, according to an embodiment of the invention, as the sole and exclusive solvent contained in the innovative ink formulations object of the present invention, is a DL-isopropylidene glycerol, otherwise also known as 2,2-Dimethyl-4-hydroxymethyl-1,3-dioxolane, or as 2,2-Dimethyl-1,3-dioxolane-4-methanol, or also as 2,2-Dimethyl-1,3-dioxolane-4-ylmethanol, uniquely identified by CAS sheet No 100-79-8.

This solvent shows excellent solvent strength and can completely replace conventional solvents of fossil origin.

It is however possible, according to further embodiments of the invention, to use other types of solvents, provided that they come from renewable sources, i.e., of plant origin, such as, preferably but not exclusively, glycerin and rapeseed oil, alone or in a mixture with each other and/or with a DL-isopropylidene glycerol.

To achieve the same performance, the rheology and mixture of resins contained in standard solvent-based ballpoint pen inks had to be adjusted by introducing at least one polymer with pseudoplastic rheological behaviour in an amount at least 0.1% by weight higher than the normal content of additives in known solvent-based inks of fossil origin.

In fact, ballpoint pen inks have a rheological behaviour that is not exactly Newtonian; to improve writing and reduce the accumulation of ink droplets around the ballpoint, it is therefore necessary to give some pseudoplasticity to the ink in order to better drag the ink on the paper. This is achieved by adding small amounts of soluble polymers that have the property of thickening the ink further, thus increasing the pseudoplasticity thereof.

Polyvinylpyrrolidone has been selected as the polymer additive, in an amount between 0.6 and 1.1% by weight, a polymer widely used as an excipient in pharmaceutical products for oral use and therefore not dangerous to health.

The solvent replacement therefore required the calibration of the amount of polymer needed to change this rheological parameter. The amounts have been increased by approximately 0.1% to achieve the same rheology as a standard ink.

The environmental and toxicological impact of 2,2-dimethyl-1,3-dioxolane-4-yl-methanol CAS No 100-79-8, compared to that of a common solvent of fossil origin, such as benzyl alcohol CAS No 100-51-6, is as follows:

**TABLE 1**

| | 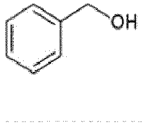 | 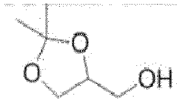 |
|---|---|---|
| **Bio-renewable source** | NO | GLYCERIN |
| **MIR** | 5.11 | 2.01 |
| g O₃/g | | |
| **Carbon footprint** | 3.88 | 1.64 |
| Kg CO₂/eq | | |
| **Acute toxicity** | Category 4 | Unclassified |
| Oral inhalation | | |
| **Skin irritation** | Category 2 | Unclassified |
| **Aquatic toxicity** | Category 2 | Unclassified |
| Fish | | |
| **CoRAP List** | Listed | Not listed |

In addition to the solvent part, which is certainly the most impactful on the atmosphere and the environment, tests were performed to replace the ketone resins of synthetic fossil origin normally used in known formulations, with resins obtainable from renewable sources.

A further improvement in terms of environmental sustainability is therefore provided, according to a preferred, non-limiting embodiment of the invention, by also replacing the polymer resin of fossil origin, such as a ketone resin, or part of it, with a resin at least partly of renewable origin, for example, of plant origin.

A family of resins that have shown positive results are cellulose esters. These high Tg (glass transition temperature) materials provide a viable alternative to ketone resins and allow the finished and in-use ink to be controlled in its rheology, drying time, and flow resistance block, thereby obtaining parameters very similar to the current ones of conventional inks with components exclusively of fossil origin, thus guaranteeing an approximate value of carbon content from renewable sources of at least 40%.

An example of a usable resin is cellulose acetate butyrate, CAB-381-0.5 (Cellulose Acetate Butyrate).

The use of this type of resins of plant origin can significantly reduce the amount of resin to the benefit of the "eco-solvent" identified above, in order to reduce the amount of solid and consequently further improve the sustainability of the ink formulation according to the invention even at the end of the product's life cycle.

An example of an eco-friendly formula alternative to the conventional ballpoint pen ink is as follows:

| | |
|---|---|
| 2-methyl-2,4-pentanediol CAS No 107-41-5 | 60% |
| Ketone resin | 34% |
| Solvent-soluble dye | 5% |
| Additives | 1% |

### EXAMPLES

The invention will now be further described with reference to the following practical, implementation examples.

### EXAMPLE 1

Several ballpoint pen ink formulations were prepared, each having a composition falling within the ranges given in Table 1 below. These formulations were then inserted into a standard ballpoint pen refill cartridge, which was used for writing tests on a blank sheet of paper. In parallel, a corresponding series of ink formulations identical to those in Table 1 were tested identically, but benzyl alcohol was used instead of 2,2-dimethyl-1,3-dioxolane-4-yl-methanol.

When comparing the tests carried out, the behaviour (fluidity, line sharpness, absence of smearing, etc.) of the innovative ink formulations according to Table 1 was found to be substantially identical to that of (identical) formulations using a conventional fossil solvent.

**TABLE 1**

| **Inks with solvents obtained from renewable sources** | **min** | **mid** | **MAX** | **Renewable source** | **min % from renewable source** | **MAX % from renewable source** |
|---|---|---|---|---|---|---|
| 2,2-dimethyl-1,3-dioxolane-4-ylmethanol | 30 | 60 | 70 | Glycerin | **30%** | **70.00%** |
| i.e., DL-isopropylidene glycerol | | | | | | |
| Ketone resin | 30 | 34 | 45 | NON-renewable | | |
| Solvent-soluble dyes | 2 | 5 | 20 | NON-renewable | | |
| Additives | | | 0.1 | 0.5 | 1 | NON-renewable |

### EXAMPLE 2

Several ballpoint pen ink formulations were prepared, each having a composition falling within the ranges given in Table 2 below.

**TABLE 2**

| **Inks with solvents and resins obtained from renewable sources** | **min** | **mid** | **MAX** | **Renewable source** | **min % from renewable source** | **MAX % from renewable source** |
|---|---|---|---|---|---|---|
| 2,2-dimethyl-1,3-dioxolane-4-ylmethanol | 30 | 60 | 70 | Glycerin | **79%** | **97.90%** |
| Cellulose Acetate Butyrate | 30 | 34 | 45 | Cellulose | | |
| Solvent-soluble dyes | 2 | 5 | 20 | NON-renewable | | |
| Additives | 0.1 | 0.5 | 1 | NON-renewable | | |

These formulations were tested as in Example 1, comparing them with the formulations in Table 1, obtaining comparable or better results.

From the above, it is clear that the object of the invention was not to improve the performance of the 'ink' product, but to solve the problem of its environmental impact, which was achieved by replacing components of mineral origin with components of plant origin, allowing an `ink' product to be obtained, which performed at least as well as conventional inks produced with substances of non-renewable origin, with the ink according to the formulations of the invention still being an ink for ballpoint pens (normally known on the market as Ball Pen Ink), but less polluting, and without having to change anything either in the process for producing the ink refill cartridges, or in the selection of the components (tip, tube, etc.) used for their standard production.

The formulations according to the invention, therefore, have less or no impact on the environment and at the same time offer a performance that is completely comparable to that of conventional, efficient but polluting inks.

Therefore, all the objects of the invention are met.

## Claims

1. An ink formulation, particularly for ballpoint pens, of the type comprising at least one solvent, at least one polymer resin, and at least one soluble dye or pigment; **characterized in that** said at least one solvent is selected exclusively from the group consisting of: a DL-isopropylidene Glycerol, glycerin of plant origin, rapeseed oil, and mixtures thereof.

2. The ink formulation according to claim 1, **characterized in that** said at least one solvent consists of a Di-isopropylidene Glycerol (also definable as 2,2-dimethyl-1,3-dioxolane-4-ylmethanol), which is uniquely identified by CAS number 100-79-8.

3. The ink formulation according to claim 1 or 2, **characterized in that** it contains, except impurities, a single solvent consisting exclusively of a dl-isopropylidene glycerol, CAS 100-79-8.

4. The ink formulation according to one of the preceding claims, **characterized in that** said polymer resin is selected from the group consisting of: ketone resins, cellulose esters, and mixtures thereof.

5. The ink formulation according to one of the preceding claims, **characterized in that** it has the following percentage composition by weight, calculated on the total weight of the formulation:
| | |
|---|---|
| • DL-isopropylidene Glycerol: | 30÷90% |
| • Ketone resin: | 10÷80 |
| • Solvent-soluble dye: | 1÷30% |
| • Additives: | 0.1÷3% |

6. The ink formulation according to one of the preceding claims, **characterized in that** it has the following percentage composition by weight, calculated on the total weight of the formulation:
| | |
|---|---|
| • DL-isopropylidene Glycerol: | 30÷70% |
| • Cellulose Acetate Butyrate: | 30÷45% |
| • Solvent-soluble dye: | 2÷20% |
| • Additives: | 0.1÷1%. |

7. The ink formulation according to one of the preceding claims, **characterized in that** it has the following average composition by weight:
| | |
|---|---|
| • DL-isopropylidene Glycerol: | 60% |
| • Ketone resin: | 34% |
| • Solvent-soluble dye: | 5% |
| • Additives: | 0.5%. |

8. The ink formulation according to one of the preceding claims, **characterized in that** it includes at least one additive consisting of a polymer with pseudoplastic rheological behaviour, preferably consisting of polyvinylpyrrolidone, in a concentration between 0.6% and 1.1% by weight.

9. A ballpoint pen refill cartridge comprising a container element and an ink, which is releasably inserted within the container element, **characterized in that** said ink has a formulation according to any of claims from 1 to 8.

10. A method for reducing the environmental impact of using ballpoint pens for writing, comprising the step of inserting into a ballpoint pen or its refill cartridge an ink, the ink itself comprising at least one solvent, at least one polymer resin, and at least one soluble dye or pigment; **characterized in that** it also comprises the step of producing said ink using a solvent of plant origin only and thus coming from renewable sources.

11. The method according to claim 10, **characterized in that** said step of producing said ink uses one and only one solvent, consisting exclusively of a DL-isopropylidene Glycerol.

12. The method according to claim 10 or 11, **characterized in that** said at least one resin is selected from cellulose esters and preferably is a cellulose acetate butyrate.

13. The method according to any of claims 10 to 12, **characterized in that**, in said step of producing said ink, a polymer with pseudoplastic behaviour, preferably polyvinylpyrrolidone, is also used, by introducing it into said ink to adjust the rheology thereof.
